Europäisches Patentamt

European Patent Office

Office européen des brevets

(19)

(11) **EP 0 967 469 B1**

(12)

# FASCICULE DE BREVET EUROPEEN

(45) Date de publication et mention
de la délivrance du brevet:
**05.11.2003 Bulletin 2003/45**

(51) Int Cl.⁷: **G01L 1/24**, C03B 18/00

(21) Numéro de dépôt: **99401493.4**

(22) Date de dépôt: **17.06.1999**

(54) **Mesure des contraintes de forme dans un matériau transparent, tel qu'un vitrage**

Messung interner Spannungen in einem transparenten Material, wie Fensterscheiben

Measuring internal strains of a transparent material like window glazings

(84) Etats contractants désignés:
**BE DE ES FR GB IT LU PT**

(30) Priorité: **22.06.1998 FR 9807836**
**24.09.1998 FR 9811932**

(43) Date de publication de la demande:
**29.12.1999 Bulletin 1999/52**

(73) Titulaire: **SAINT-GOBAIN GLASS FRANCE**
**92400 Courbevoie (FR)**

(72) Inventeurs:
• **Zhang, Jingwei**
**92160 Antony (FR)**

• **Grente, Pascal**
**92400 Courbevoie (FR)**

(74) Mandataire: **Muller, René et al**
**SAINT-GOBAIN RECHERCHE**
**39, quai Lucien Lefranc**
**93300 Aubervilliers (FR)**

(56) Documents cités:
**FR-A- 2 563 337        US-A- 3 715 915**
**US-A- 3 902 805        US-A- 4 320 966**

**Description**

DOMAINE DE L'INVENTION

La présente invention concerne un procédé et un dispositif pour la mesure des contraintes de forme au sein d'un matériau transparent, tel qu'un vitrage. De telles contraintes peuvent apparaître notamment dans un ruban de verre flotté sortant au bout de la ligne de production. La maîtrise imparfaite des contraintes de forme est la cause principale des casses de verre sur la ligne de verre flotté. La mesure du profil de ces contraintes permet de mieux les maîtriser et d'améliorer la productivité.

Il est connu également de créer dans la zone périphérique de certains vitrages, tels que les vitrages automobiles, un certain état de précontrainte afin de conférer une résistance accrue à cette zone qui est généralement fragile.

ETAT ANTERIEUR DE LA TECHNIQUE

On connaît dans la technique un dispositif de mesure des contraintes dans un vitrage, qui est connu sous le nom de dispositif de Sharples. Ce dispositif comprend une source de lumière qui émet un faisceau de lumière, lequel traverse successivement un polariseur rotatif, le vitrage, une lame quart d'onde, un analyseur et une photodiode.

Si le matériau transparent est soumis à des contraintes locales, son indice de réfraction est modifié de manière anisotrope, ce qui a pour effet de créer une biréfringence locale dans le matériau. La biréfringence a pour effet de déphaser les différentes composantes de polarisation de la lumière qui traverse le matériau.

On montre par la théorie de la photoélasticité que la contrainte σ existant en un point du vitrage est donnée par la formule :

$$\sigma = \frac{\lambda}{2\pi\ C_o E}\ \psi \qquad\qquad (1)$$

où

λ est la longueur d'onde de la lumière,
E est l'épaisseur du vitrage,
$C_o$ est la constante de photoélasticité du vitrage,
et ψ est le déphasage introduit par la biréfringence du vitrage en raison de l'existence d'une contrainte.

On mesure ψ en faisant tourner l'analyseur jusqu'à ce que l'intensité lumineuse observée à sa sortie soit nulle. A ce moment, on observe une bande noire à l'endroit du vitrage où l'on mesure le déphasage.

L'appareil de Sharples est peu fiable car les mesures qu'il permet d'effectuer intègrent un facteur humain non négligeable et des procédures différentes selon l'utilisateur. La visualisation de la ligne noire dépend en effet de la vision de chacun. On a ainsi remarqué qu'avec l'appareil sharples, il existe une forte dispersion des mesures qui peut être de l'ordre de 2MPa pour une valeur de contrainte de l'ordre de 5MPa.

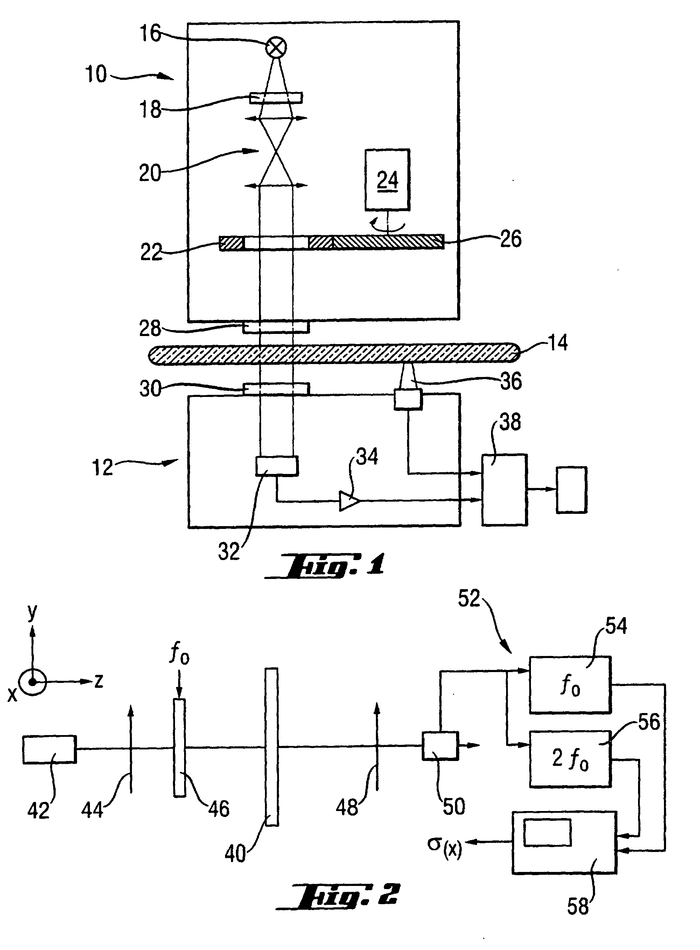

Par le brevet n° 2 563 337 appartenant à la même Demanderesse, on connaît un autre dispositif de mesure de la contrainte qui remédie partiellement aux inconvénients du dispositif de Sharples. Ce dispositif, qui est illustré par la figure 1 annexée, comprend un dispositif émetteur de lumière 10 et un dispositif récepteur de lumière 12 disposés respectivement au dessus et en dessous d'un matériau transparent, par exemple un ruban de verre 14 sortant au bout de la ligne de production. Le ruban de verre est supposé défiler dans la direction perpendiculaire au plan de la feuille. Le dispositif émetteur comprend une. source de lumière 16, un filtre interférentiel 18 pour filtrer le faisceau et laisser passer un faisceau monochromatique de longueur d'onde λ prédéterminée, un système optique 20 servant à collimater le faisceau monochromatique, un polariseur tournant 22 entraîné par un moteur 24 par l'intermédiaire d'une roue dentée 26 et une lame quart d'onde 28 orientée à 45° de l'axe longitudinal du ruban de verre.

Le dispositif récepteur 12 comprend un analyseur 30 orienté à 45° de l'axe longitudinal du ruban de verre, un filtre interférentiel suivi par une photodiode 32 et un amplificateur 34.

Un pyromètre 36 est installé au voisinage du dispositif récepteur 12 pour mesurer le profil transversal de température du verre. Les sorties de la photodiode et du pyromètre sont reliées à un microprocesseur 38.

Le déphasage ψ est mesuré par un codeur optique et est mémorisé dans le microprocesseur. On peut donc calculer à partir de la formule (1) la contrainte σ en tout point du ruban de verre.

Le dispositif émetteur 10 et le dispositif récepteur 12 sont montés sur deux portiques se trouvant respectivement au-dessus et en dessous du ruban de verre et se déplacent d'un mouvement de va-et-vient sur ces portiques, le long de rails de guidage orientés dans le sens transversal du ruban de verre. Le mouvement des deux dispositifs doit être synchrone de manière que leur axe optique soit toujours dans l'alignement l'un de l'autre.

Le dispositif selon ledit brevet permet de mesurer correctement les contraintes, mais il présente plusieurs inconvénients

- il est d'un coût élevé en raison de l'utilisation de deux portiques qui doivent être entraînés de façon synchrone,
- l'entraînement en rotation du système optique formé par le polariseur et par le codeur est effectué par des transmissions mécaniques relativement compliquées nécessitant un entretien permanent,
- la fréquence du signal, qui est de l'ordre de quelques hertz, est trop faible pour que l'on puisse effectuer une mesure précise du déphasage $\psi$, car à cette fréquence, l'intensité lumineuse fluctue avec les moindres perturbations, telles que les poussières, les inclusions ou que les irrégularités des couches déposées sur le verre.

La présente invention vise à remédier à ces inconvénients en proposant un procédé et un dispositif de mesure des contraintes qui soient performants et qui permettent de simplifier la mécanique de translation des boîtiers, voire de l'éliminer complètement, de manière à en diminuer le coût.

Elle concerne également un procédé et un dispositif de mesure de contraintes qui soient insensibles aux fluctuations de l'intensité dues aux poussières, aux inclusions dans le verre et aux irrégularités des couches déposées sur le verre.

Elle concerne encore un procédé et un dispositif de mesure de contraintes permettant d'effectuer de bonnes mesures même si le signal est faible par rapport au bruit.

Avant d'exposer l'invention, on expliquera tout d'abord le principe qui en est à la base.

Soit un milieu biréfringent soumis à une contrainte et placé entre un polariseur et un analyseur. On sait qu'il introduit un déphasage $\psi_0$ et que l'intensité lumineuse I mesurée à la sortie de l'analyseur est maximale si le polariseur et l'analyseur sont croisés et sont à 45° par rapport aux axes propres du milieu biréfringent. Cette intensité est donnée par la formule :

$$I = \frac{I_o}{2}(I + C \cos \psi_0)$$

où C est le contraste et $I_o$ est l'Intensité lumineuse en transmission.

Le déphasage $\psi_0$ peut être la somme de plusieurs déphasages introduits par différents composants optiques. si l'un de ces composants est un modulateur, par exemple du type photoélastique, dont les axes propres sont confondus avec ceux du ruban de verre, on aura

$$\psi_0 = \psi + \psi_m$$

où

$\psi$ est le déphasage à mesurer du ruban de verre

$\psi_m$ est le déphasage introduit par le modulateur.

En désignant par $f_0$ la fréquence d'excitation du modulateur, on a $\psi_m = A_0 \cos(2\pi f_0 t)$.

L'intensité mesurée est alors :

$$I = \frac{I_0}{2}\left\{1 + C \cos\left[\psi + A_0 . \cos(2\pi f_0 t)\right]\right\}$$

De l'expression précédente, on tire :

$$\frac{2I}{Io} - I = C.\cos\psi \cos\left[A_o \cos(2\pi f_0 t)\right] - C.\sin\psi \sin\left[A_o \cos(2\pi f_0 t)\right]$$

Les amplitudes des composantes de I aux fréquences $f_0$ et $2 f_0$ sont données respectivement par :

$$B(f_0) = - CI_0 J_1(A_0) . \sin\psi$$

$$B(2 f_0) = - CI_0 J_2(A_0) \cdot \cos\psi$$

où les $J_N$ sont des fonctions de Bessel du $N^{ième}$ ordre.

Mais ces deux composantes ne permettent pas de calculer le déphasage $\psi$ car, compte tenu des conditions réelles de mesure, le contraste C est égal à une valeur inconnue inférieure à 100%. De même, $I_0$ est inconnu étant donné que l'absorption du verre varie d'une composition à l'autre et que les poussières, les inclusions dans le verre et les irrégularités de surface provoquent une variation rapide de $I_0$.

On s'affranchit de ces difficultés en calculant le rapport :

$$\frac{B(f_0)}{B(2\,f_0)} = \frac{J_1(A_0)}{J_2(A_0)} \cdot \tan\psi$$

d'où l'on tire :

$$\psi = \text{Arc tan } \frac{J_2(A_0)}{J_1(A_0)} \cdot \frac{B(f_0)}{B(2\,f_0)} \tag{2}$$

Ainsi, la connaissance des deux composantes en $f_0$ et $2\,f_0$ du signal permet de déduire la valeur du déphasage $\psi$ et donc la contrainte $\sigma$. Ce raisonnement est, bien entendu, valable pour toute composante $2n. f_0$ et $(2n+1). f_0$, cela ne changeant que la valeur des coefficients de Bessel dans la relation finale.

Le principe qui vient d'être exposé est très général et s'applique aussi bien en transmission qu'en réflexion.

L'invention utilise ce principe en vue de simplifier la mécanique de translation du dispositif et d'améliorer la performance des mesures.

RESUME DE L'INVENTION

La présente invention concerne un procédé pour la mesure de contraintes selon la revendication 12.

Le procédé selon l'invention peut être appliqué à un matériau transparent animé lui même d'un mouvement. Ceci est le cas par exemple pour le ruban de verre flotté qui sort d'une ligne de production de verre. On peut alors balayer toute la surface du matériau, en donnant au faisceau lumineux un mouvement oscillant d'amplitude au moins égale à la dimension du matériau qui est perpendiculaire à sa direction de déplacement.

Selon une variante du procédé de l'invention, on renvoie la lumière ayant traversé le matériau transparent à l'aide d'une bande diffusante et/ou réfléchissante disposée de l'autre côté du matériau transparent par rapport au dispositif émetteur de lumière, et on place le dispositif récepteur de lumière du même côté que le dispositif émetteur de lumière pour recevoir ladite lumière renvoyée.

Avantageusement, le dispositif émetteur de lumière et le dispositif récepteur de lumière peuvent alors être rendus solidaires l'un de l'autre, être disposés en un point fixe et être animés de mouvements oscillants. Grâce à cette réalisation, le dispositif de mesure ne comporte aucun portique pour supporter les dispositifs d'émission et de réception.

Le procédé de l'invention peut également être appliqué à un matériau transparent revêtu sur une de ses faces d'une couche opaque, comme c'est le cas pour les vitrages d'automobile qui sont recouverts sur leur périphérie d'une couche d'émail de couleur très foncée. Le faisceau lumineux qui émerge du dispositif émetteur pénètre dans le matériau transparent par la face qui est opposée à celle revêtue de la couche opaque. En atteignant celle-ci, la lumière est diffusée dans toutes les directions, une partie de la lumière diffusée traversant la couche opaque et une partie étant réfléchie. Le dispositif récepteur de lumière peut être disposé soit du côté de la couche opaque de manière à recevoir la lumière diffusée transmise à travers le matériau transparent, soit du côté opposé à la couche opaque de manière à recevoir la lumière réfléchie par celle-ci.

L'invention concerne également un dispositif de mesure des contraintes selon la revendication 12.

Le dispositif selon l'invention ne présente aucun des inconvénients des dispositifs de la technique antérieure. En particulier, le dispositif est d'une grande simplicité de construction du fait qu'il ne comporte pas de portique.

De plus, l'utilisation du modulateur photoélastique permet de maintenir fixe le polariseur. Il en résulte une simplification du système mécanique.

En outre, le dispositif selon l'invention est facile à régler. Bien que l'intensité lumineuse maximale ne puisse être obtenue qu'en croisant le polariseur et l'analyseur et en les plaçant à 45° par rapport aux axes propres du matériau transparent, cette condition n'est pas obligatoire dans le cas de l'invention. Autrement dit, le contraste C ne doit pas forcément être égal à 100% puisque, comme on l'a expliqué précédemment, le rapport $B(f_0)/B(2\,f_0)$ ne dépend pas du contraste.

pour la même raison, le dispositif est insensible aux problèmes de fluctuation de l'intensité lumineuse $I_0$ causés par les poussières, les inclusions et l'irrégularité des couches. De plus, avec la fréquence de modulation relativement élevée qui est de 50 kHz, la vitesse de mesure est tellement rapide que, pendant la mesure, la variation de l'intensité lumineuse $I_0$ est négligeable.

Bien qu'un diffuseur dépolarise partiellement la lumière, et qu'il rend par conséquent le contraste encore plus faible de façon inconnue, la mesure est toujours fiable pour la même raison que précédemment.

Un autre avantage réside dans le fait que l'emploi de la détection synchrone pour mesurer les amplitudes de l'intensité lumineuse en $f_0$ et 2 $f_0$ rend le dispositif très robuste au bruit. Il permet d'effectuer de bonnes mesures même si le signal est faible par rapport au bruit.

Enfin, le procédé et le dispositif selon l'invention permettent de tracer le profil des contraintes sur toute la largeur du matériau transparent.

BREVE DESCRIPTION DES FIGURES

L'invention sera mieux comprise à la lecture de la description qui va suivre, faite en regard des dessins annexés dans lesquels :

la figure 1 est une vue schématique d'un dispositif de mesure des contraintes selon la technique antérieure ;
la figure 2 est une vue schématique d'un dispositif de mesure de contraintes monté en transmission et basé sur le principe de l'invention, le matériau transparent étant constitué par un étalon ;
la figure 3 est une vue en coupe schématique d'un modulateur photoélastique ;
la figure 4 représente le cycle de modulation du modulateur photoélastique ;
la figure 5 montre un profil de contrainte obtenu avec le dispositif de la figure 2 sur un étalon de matière transparente ;
la figure 6 est une vue schématique d'un dispositif de mesure de contraintes monté en diffusion selon un premier mode de réalisation de l'invention utilisant un seul portique ;
la figure 7 montre un profil de contrainte obtenu avec le dispositif de la figure 6 sur un étalon de matière transparente ;
la figure 8 est une vue schématique d'un dispositif de mesure de contraintes également monté en diffusion, mais n'utilisant aucun portique ;
les figures 9, 10 et 11 montrent respectivement des courbes de contraintes obtenues avec les dispositifs des figures 1, 6 et 8 sur un ruban de verre flotté ;
la figure 12 montre la courbe théorique de variation de la contrainte dans la zone périphérique d'un vitrage recouverte d'une couche opaque en fonction de la distance au bord du vitrage;
la figure 13 représente un dispositif de mesure des contraintes dans ladite zone, les mesures étant effectuées en transmission-diffusion ;
la figure 14 montre la courbe de variation du déphasage en fonction de la position sur la zone à mesurer du vitrage, obtenue avec le dispositif de la figure 13 ;
la figure 15 représente la même courbe mais corrigée pour éliminer le saut de déphasage ;
la figure 16 représente le profil de contrainte déduit de la courbe de la figure 15 ;
la figure 17 représente un autre mode de réalisation d'un dispositif de mesure de contrainte dans ladite zone, dans lequel les mesures sont effectuées en réflexion-diffusion ;
les figures 18 et 19 sont des courbes de variation du déphasage analogues respectivement aux figures 14 et 15 et obtenues avec le dispositif de la figure 17 ;
la figure 20 représente le profil de contrainte déduit de la courbe de la figure 19 ;
la figure 21 montre les deux courbes des figures 16 et 20 superposées, et
la figure 22 montre une variante de réalisation de vitrage auquel le procédé de l'invention peut être appliqué, le vitrage étant feuilleté et comprenant une couche opaque comprise entre deux de ses couches constitutives.

DESCRIPTION DETAILLEE DE MODES DE REALISATION PREFERES

La description qui va suivre sera faite dans le cas particulier d'un ruban de verre flotté sortant d'une ligne de production, mais elle s'applique également à tout matériau transparent.

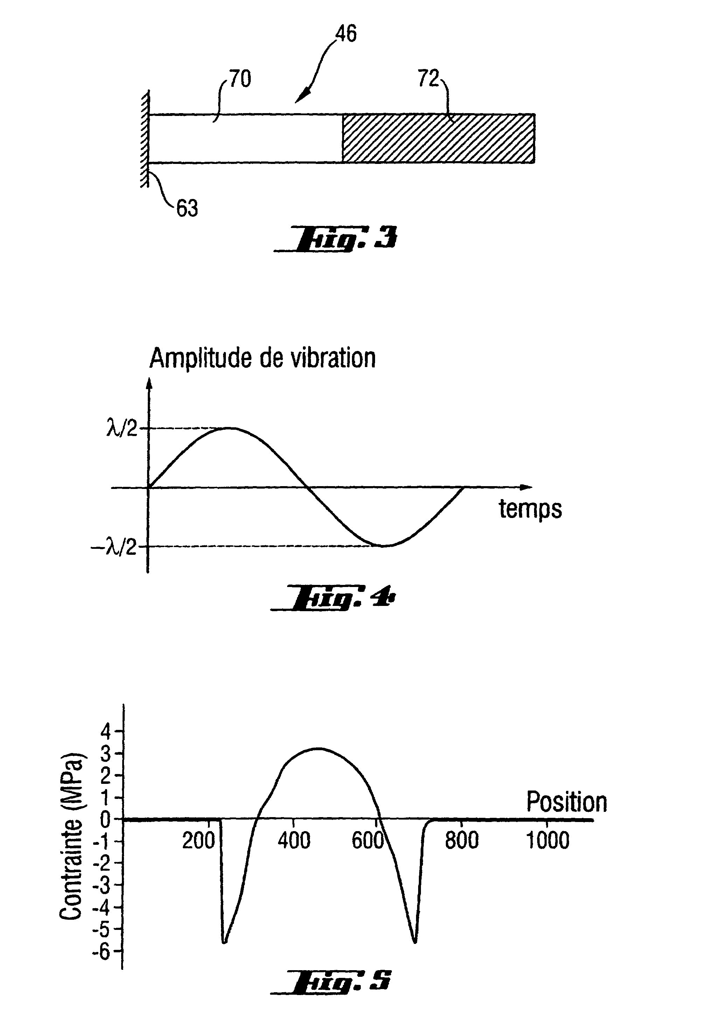

La figure 1 ayant déjà été décrite, on passera directement à la description de la figure 2, qui représente un dispositif de mesure des contraintes par transmission incorporant un modulateur photoélastique et un dispositif de détection synchrone et qui va servir à valider le procédé de mesure des contraintes par diffusion de l'invention.

Le principe de la validation est le suivant : à la place du ruban de verre, on utilise des étalons de verre précontraints 40 dont les profils de contrainte sont parfaitement connus. Ces étalons sont obtenus à partir de volumes de verre qui sont recuits afin d'obtenir un profil de contrainte similaire à celui du ruban de verre sortant au bout de la ligne de production.

On insère tour à tour chacun de ces étalons dans le dispositif de mesure de la figure 2. Ce dispositif permet de déterminer expérimentalement le profil de contrainte de chacun des étalons. Si le profil trouvé par la mesure est le même que le profil connu de l'étalon, on pourra conclure que le procédé de l'invention est validé.

On a représenté sur la figure 2 un système de coordonnées Oxyz, dont les axes Ox, Oy et Oz sont respectivement parallèles aux directions longitudinale, transversale et normale au plan de l'étalon 40.

Le dispositif de la figure 2 comprend une source de lumière monochromatique 42, par exemple un laser hélium-néon de 2mW ($\lambda$ = 632,8 nm). La lumière traverse successivement un polariseur 44 orienté à 45° de l'axe Oy, un modulateur photoélastique 46 qui est orienté de façon que ses axes soient confondus avec les axes Ox et Oy, l'étalon de verre 40 à profil de contraintes connu, la direction de contrainte étant parallèle à l'axe Oy, un analyseur 48 orienté à -45° de l'axe Oy et une photodiode 50 qui convertit la lumière en un signal électrique.

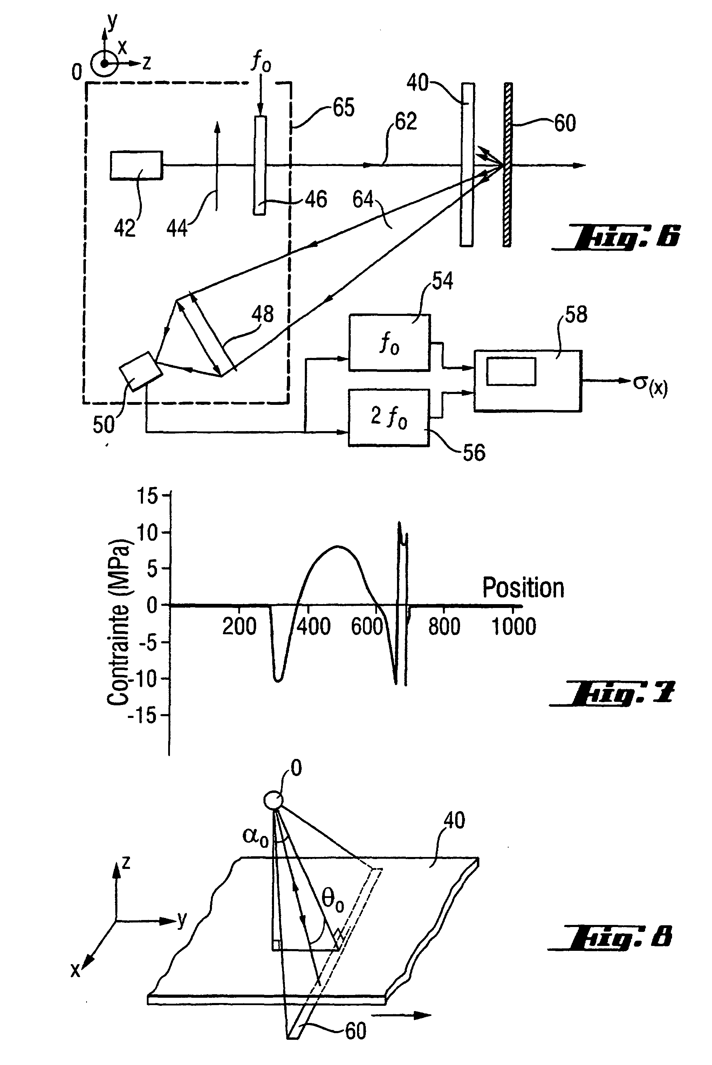

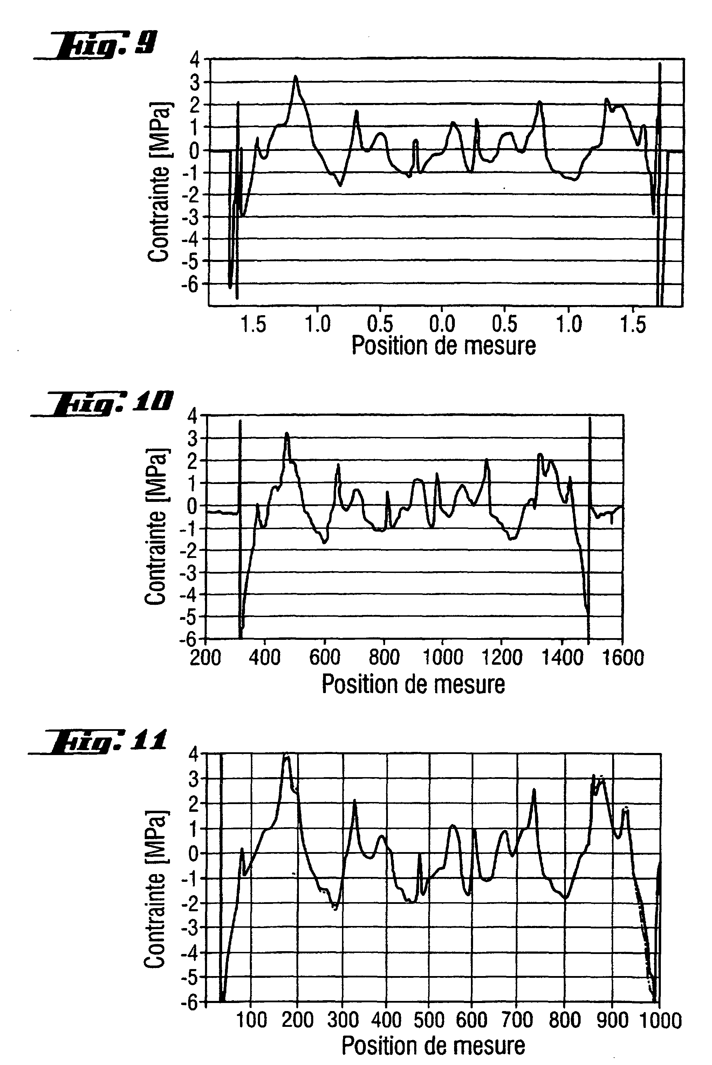

On rappellera brièvement la structure et le fonctionnement d'un modulateur photoélastique en se référant aux figures 3 et 4.

Le modulateur photoélastique 46 est constitué d'un barreau d'un matériau transparent 60, par exemple en silice, dont l'une des extrémités est collée sur un cristal piézo-électrique 62 et dont l'autre extrémité est en appui sur une butée mécanique 63.

Le modulateur est un appareil résonnant qui produit une biréfringence oscillant à une fréquence fixe. Dans le cas présent, la fréquence est de 50 kHz.

Le cristal piézo-électrique est excité à la fréquence de résonance du barreau transparent 60 et est piloté par un circuit électronique qui contrôle l'amplitude des oscillations. C'est l'amplitude des oscillations qui détermine le cycle de modulation de l'état de polarisation de la lumière qui émerge du modulateur. On travaillera ci-après avec une amplitude $A_0 = \pi$.

La figure 4 représente la variation de l'amplitude de vibration avec le temps pour un état de polarisation à 45° du modulateur.

Revenant à la figure 2, le signal sortant de la photodiode est envoyé à un dispositif de détection synchrone 52 comprenant deux amplificateurs à détection synchrone 54, 56 dont les références sont fournies par le modulateur photoélastique 46. Ces références peuvent être choisies égales à $f_0$ et à $2f_0$, par exemple 50 kHz et 100 kHz. On récupère à la sortie des amplificateurs 54, 56 deux signaux analogiques $B(\omega_0)$ et $B(2\omega_0)$ correspondant aux composantes spectrales en $f_0$ (50 kHz) et $2f_0$(100 kHz) du signal mesuré par la photodiode.

Ces deux signaux analogiques sont convertis en numérique par un banc d'acquisition 58 qui détermine la valeur du déphasage $\psi$ en utilisant l'expression (2) mentionnée précédemment et par conséquent la contrainte. On obtient ainsi directement le tracé du profil de contrainte de l'étalon de verre.

Dans un exemple de réalisation particulier, on utilise deux étalons ayant une contrainte au centre de 3,25 MPa pour l'un et de 3,9 MPa pour l'autre et ayant des profils sensiblement paraboliques.

Pour $A_0 = \pi$, on a $J_1(A_0)$ = 0,2846 et $J_2(A_0)$ = 0,4854.

En reportant ces valeurs dans l'expression (2), on obtient :

$$\psi = \text{Arc tan} \left[ 1.706 \ \frac{B(f_0)}{B(2f_0)} \right] = \frac{2\pi}{\lambda_{(nm)}} C_0 \sigma \ E_{(nm)} \cdot 10^6$$

où $C_0$ = 2,6 $10^{-6}$ MPa$^{-1}$

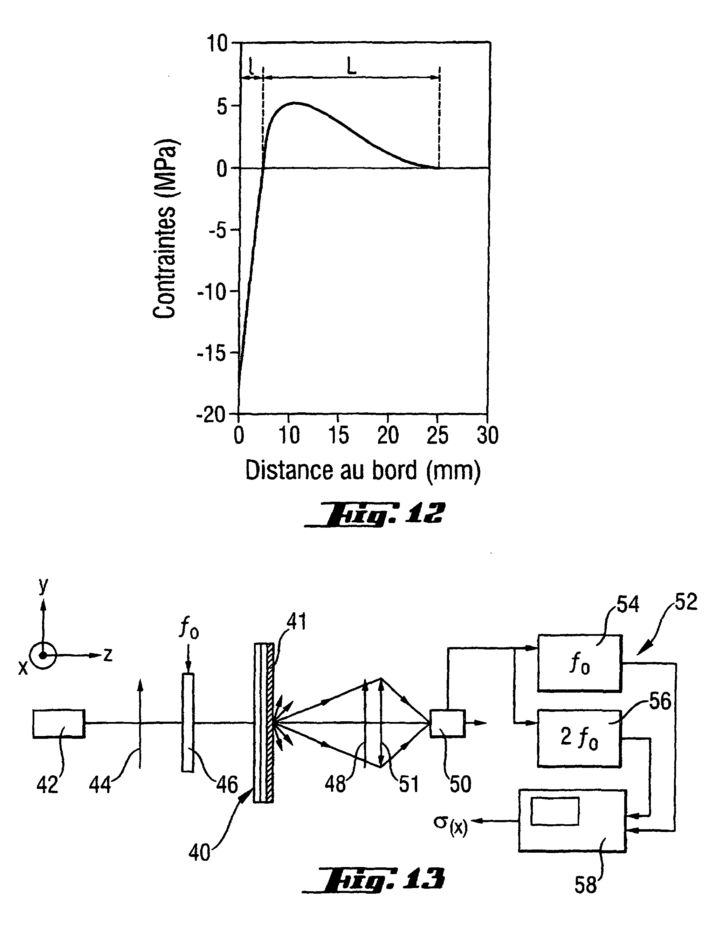

La figure 5 montre le profil de contrainte ainsi obtenu. On constate que ce profil correspond parfaitement au profil mesuré par la technique antérieure pour l'étalon, puisque sur la figure 5 on relève un maximum de 3,20 MPa alors que, comme précisé plus haut, la valeur mesurée manuellement est de 3,25 MPa.

Cette expérience a été renouvelée avec plusieurs étalons de verre précontraints et à chaque fois, les valeurs obtenues par le procédé de l'invention sont égales à celles mesurées manuellement.

Le procédé de l'invention est donc validé dans la configuration en transmission.

On décrira à présent l'application de ce procédé au dispositif de mesure de la contrainte par diffusion selon l'invention.

Un premier mode de réalisation de ce dispositif est représenté sur la figure 6. Sur cette figure, on désigne par les mêmes références les éléments homologues de ceux de la figure 2. Le dispositif de la figure 6 diffère de celui de la figure 2 par le fait que :

- le dispositif d'émission (qui comprend le laser 42, le polariseur 44 et le modulateur 46) et le dispositif de réception (qui comprend l'analyseur 48 et le détecteur 50) sont placés du même côté que le verre à mesurer 40 ;

- il comporte une bande 60 en matière réfléchissante ou diffusante disposée de l'autre côté du ruban de verre et qui est capable de renvoyer au moins une partie du faisceau incident 62 qu'il reçoit, vers le dispositif de réception sous forme d'un faisceau diffusé 64 ;

- la photodiode est remplacée par une photodiode à avalanche, plus sensible, parce que le flux diffusé 64 est plus faible que le flux transmis 62.

On notera qu'une autre différence notable par rapport au cas de la transmission réside dans le fait que la lumière traverse deux fois le verre avant d'être détectée. En choisissant un angle faible entre l'axe d'émission et l'axe de réception, on mesurera deux fois la contrainte, ce qui double la sensibilité de la mesure.

Le dispositif d'émission et le dispositif de réception sont réunis dans un même boîtier 65 qui est monté coulissant sur un portique monorail, non représenté. Le rail est disposé transversalement par rapport au sens de défilement du ruban de verre 40, de sorte qu'au cours des trajets aller et retour du boîtier, le faisceau lumineux émis 62 parcourt le ruban de verre sur toute sa largeur.

La bande 60 est disposée transversalement par rapport au ruban de verre, de préférence dans le plan vertical qui contient le rail et qui est perpendiculaire au ruban de verre. La bande sera de préférence réalisée en une matière de signalisation réflectorisée ou en métal anodisé blanc.

Un exemple de mesure sur un étalon est représenté sur la figure 7. On mesure une contrainte maximale $\sigma_M$ = 7,80 MPa au centre de la plaque, alors que la valeur donnée est de 3,9 MPa, qui est bien la moitié de la valeur mesurée.

On peut remarquer le saut qui existe en fin de profil. Ce saut est dû au fait que le déphasage mesuré dépasse 90°, du fait que la sensibilité de la mesure est doublée. Il en résulte que l'expression (2) qui permet de déterminer la contrainte donne un résultat présentant un décalage d'une période de 180° dans l'Arctangente. Ce saut est du reste facile à corriger numériquement.

Le profil ainsi obtenu est tout à fait conforme à celui mesuré manuellement. Le montage en diffusion est donc lui aussi validé. Ce montage est avantageux puisqu'il permet de n'utiliser qu'un seul portique.

On se référera à présent à la figure 8 qui représente un second mode de réalisation du dispositif de mesure de la contrainte par diffusion.

Comme dans le mode de réalisation précédent, le dispositif d'émission et le dispositif de réception sont implantés côte à côte dans un boîtier, schématisé par le point 0. Le boîtier est monté en position fixe au-dessus du ruban de verre 40.

Le système d'émission et de réception tourne autour du point fixe 0 de façon que le rayon laser balaye angulairement toute la largeur du ruban de verre. L'angle de balayage $\theta_0$ varie entre -45° et + 45°. Le retour de la lumière est assuré par une bande en matière diffusante 60 fixée sur un support transversal disposé sous le ruban de verre.

Comme le montre la figure 8, le système d'émission-réception ne se trouve pas à la verticale du ruban de verre mais il est décalé angulairement vers l'arrière par rapport à cette verticale d'un angle $\alpha_0$, afin d'éviter un retour par réflexion spéculaire d'un rayon réfléchi par le verre lorsque le rayon laser attaque le ruban perpendiculairement ($\theta_0$ = 0).

En effet, lors du balayage angulaire, le détecteur reçoit toujours une intensité lumineuse assez stable. Mais, si le rayon réfléchi par réflexion spéculaire est perçu, une augmentation brutale d'intensité lumineuse sera observée, ce qui peut saturer le détecteur. De plus, la réflexion spéculaire comporte aussi une information sur l'interférence entre les réflexions sur les deux faces du ruban de verre, ce qui invalide la théorie exposée précédemment. En pratique, on règle $\alpha_0$ à une faible valeur de 5°.

La configuration de la figure 8 est encore plus simple et plus économique que celle de la figure 6, puisqu'elle ne comporte aucun portique. De plus, du fait que le système d'émission-réception peut être placé très au-dessus du ruban de verre, il est possible d'installer un système de refroidissement. Ceci offre la possibilité d'effectuer une mesure des contraintes à chaud.

Toutefois, les résultats fournis sur le dispositif de la figure 8 nécessitent une correction, car le fait de balayer angulairement le ruban de verre implique que l'angle d'incidence du rayon laser sur le verre est variable et que l'épaisseur de verre traversée est aussi variable. L'expression (5) où l'épaisseur E est supposée constante ne peut donc pas s'appliquer.

On montre que les contraintes effectives $\sigma'_i$ mesurées en un point fixe lorsque l'angle d'incidence sur le verre varie, sont reliées aux contraintes à mesurer $\sigma_i$ par les relations suivantes :

$$\sigma'_1 = \sigma_1(\cos^2\theta'_0 - \sin^2\alpha'_0\sin^2\theta'_0)$$

$$\sigma'_2 = \sigma_2 \cos^2 \alpha'_0$$

où $\alpha'_0$ et $\theta'_0$ sont deux angles définis dans le verre, tels que $n \sin\alpha'_0 = \sin \alpha'_0$ et $n \sin \theta'_0 = \sin \theta_0$ où $n$ est l'indice de réfraction de verre.

Dans le cas concret de l'invention, on a $\sigma_1 = 0$ et $\alpha'_0$ est très faible. Il en résulte que $\sigma'_2 = \sigma_2$. L'épaisseur effective est alors $E_e = E/\cos \theta'_0$. Finalement, le déphasage $\psi$ est donné par la formule :

$$\psi = \frac{2\pi}{\lambda} \sigma'_2 \, 2E_e = \frac{4\pi}{\lambda} \sigma_2 \frac{E}{\cos \theta'_0}$$

La figure 9 montre la courbe de variation des contraintes sur une ligne de production de verre flotté dans le cas d'un dispositif antérieur et la figure 10 montre la courbe dans le cas d'un dispositif de mesure par diffusion, avec un seul portique. On peut remarquer la très bonne concordance des résultats obtenus par les deux systèmes de mesure.

Enfin, la figure 11 représente la courbe de variation des contraintes dans le cas d'un dispositif de mesure par diffusion, sans portique, la courbe en traits tiretés étant la courbe brute et la courbe en trait continu étant la courbe corrigée pour tenir compte de la variation de l'angle d'incidence.

Le procédé de mesure de contraintes selon l'invention peut être appliqué pour effectuer des mesures sur des verres spéciaux, tels que le verre imprimé qui présente de fortes déformations géométriques et le verre très absorbant.

Grâce à sa grande vitesse de mesure, le dispositif de mesure selon l'invention est capable d'effectuer de bonnes mesures sur le verre imprimé, car le temps de mesure est tellement court que pendant cette durée, la déformation du verre ne peut pas perturber le signal de façon significative.

De plus, le dispositif selon l'invention est très robuste au bruit électronique. Le traitement du signal permet de détecter la mesure même lorsque le rapport signal/bruit est faible. Le dispositif permet donc de fonctionner avec des verres à très forte absorption.

Le procédé selon l'invention peut également être appliqué à la mesure des contraintes dans un matériau transparent recouvert sur une de ses faces d'une de ses faces d'une couche de matière opaque. C'est le cas par exemple de certains vitrages automobiles, tels que pare-brise qui sont recouverts sur leur périphérie d'une couche d'émail de couleur très foncée, afin de protéger la colle qui est nécessaire à la pose du vitrage contre l'action des rayons ultra-violets et également afin de cacher les défauts de jointure.

Il est connu de créer dans la zone du bord périphérique de ces vitrages, un certain état de précontrainte, afin de conférer une résistance accrue à cette zone qui est généralement fragile. Ceci a pour conséquence de générer des contraintes de compression dans la zone du bord et en contrepartie, des contraintes en extension sur une bande de quelques centimètres de largeur, intérieure par rapport à cette zone. Ce phénomène est illustré par la figure 12 ci-jointe qui représente la courbe de variation de la contrainte en fonction de la distance au bord. La zone en compression a une largeur l et la zone en extension a une largeur L.

Le procédé et les dispositifs de mesure décrits précédemment peuvent être utilisés pour mesurer les contraintes sur toute la largeur du bord périphérique du vitrage.

La figure 13 représente le dispositif de mesure par transmission de la figure 2, qui est adapté pour mesurer les contraintes d'un vitrage recouvert d'une couche opaque 41. Les éléments de ce dispositif identiques à ceux de la figure 2 ont été désignés par les mêmes références numériques. On ne décrira pas ce dispositif, mais on notera seulement que le dispositif émetteur de lumière est disposé du côté opposé à la face du vitrage qui est recouverte de la couche opaque 41 et que, pour augmenter la sensibilité du dispositif, on utilise une lentille convergente 51 et, comme photodiode, une photodiode à avalanche 50.

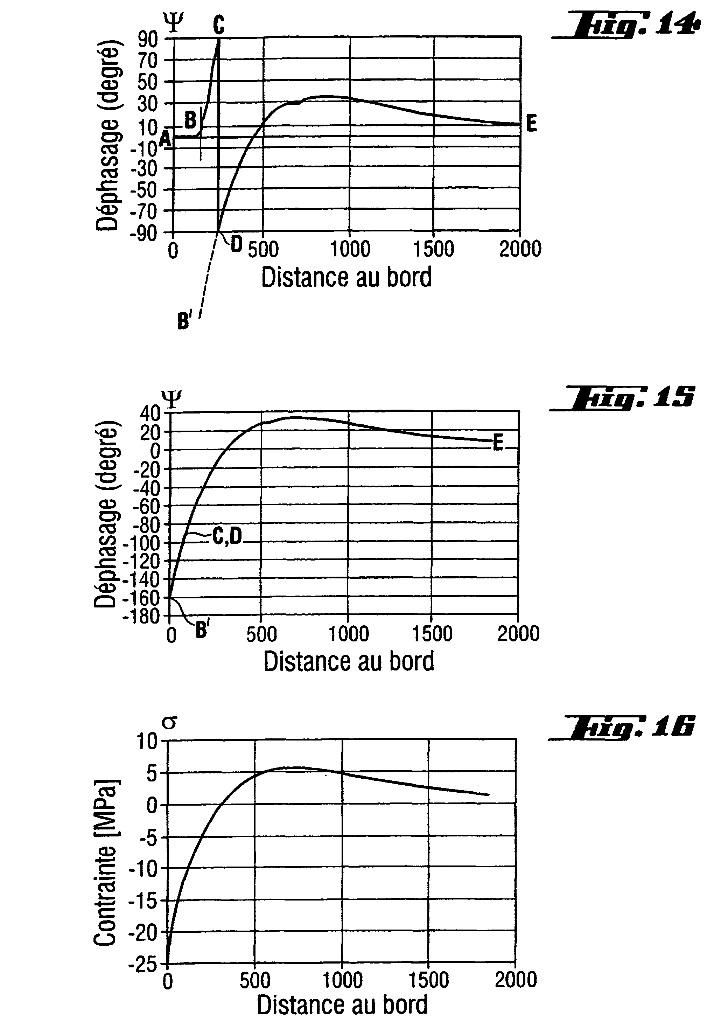

Dans un exemple de réalisation particulier où le modulateur travaille avec une amplitude d'oscillation égale $\pi$, où le vitrage est un pare-brise feuilleté ayant une épaisseur de 4,8 mm et où on l'éclaire avec une lumière ayant une longueur d'onde de $\lambda = 675$ nm, on obtient le profil représenté sur la figure 14. Ce profil donne le déphasage $\psi$ en fonction de la distance au bord du point où est effectuée la mesure, l'unité de distance étant arbitraire. $\psi$ est calculé par la formule (2) donnée plus haut.

On remarque déjà que ce profil a la même allure que le profil théorique représenté à la figure 12. Les sauts de phase observés au début du profil sont dus au fait que la fonction Arctangente a ses valeurs comprises entre -90° et +90°. Comme la valeur du déphasage est supérieure à 90°, le résultat présente un décalage d'une période de 180° dans l'Arctangente.

Pour corriger ce défaut, on procède comme suit :

-   on découpe aux ciseaux les trois tronçons AB, BC et DE de la courbe,

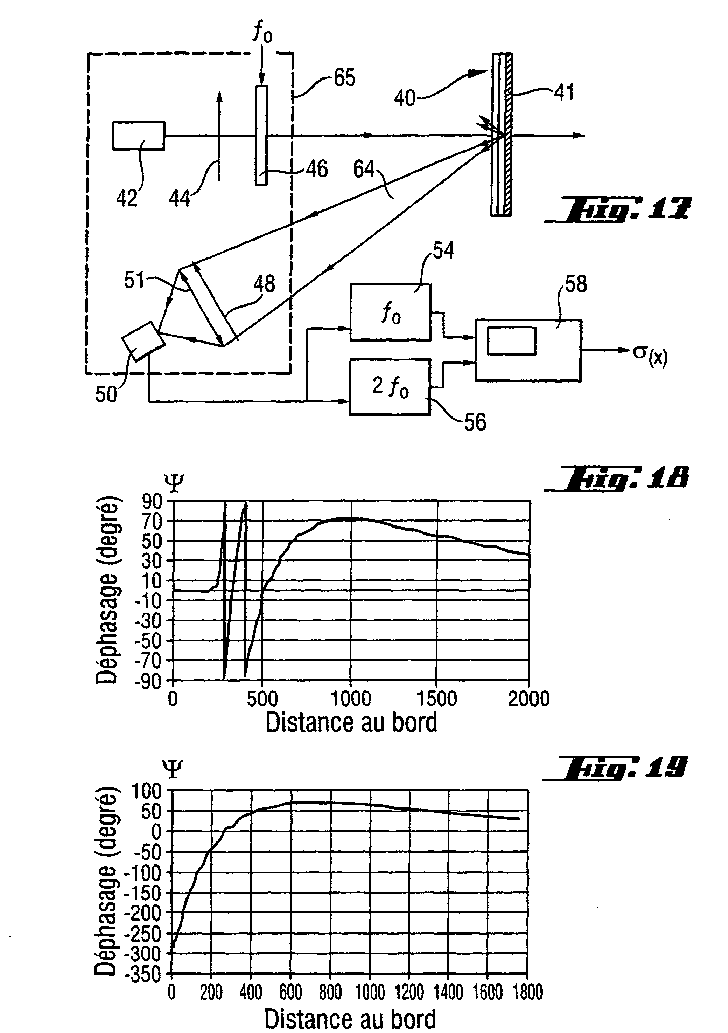

- on élimine le tronçon horizontal AB qui correspond à des mesures effectuées dans l'air, avant le bord de l'échantillon, et donc sans intérêt,
- on fait subir au tronçon BC une translation verticale vers le bas d'amplitude 90° de manière à faire coïncider le point C avec le point D. On obtient ainsi le tronçon B'D,
- on fait subir à la courbe B'DE ainsi obtenue une translation horizontale vers la gauche de manière à amener le point B' sur l'axe des ordonnées. On obtient alors la courbe de la figure 15.

On effectue ensuite la conversion du déphasage en valeurs de contrainte, ce qui donne la courbe de la figure 16.

On relève sur les courbes 15 et 16 les valeurs maximales du déphasage et de la contrainte en extension. Elles sont respectivement de 34° et de 5,1 MPa. Les valeurs minimales du déphasage et de la contrainte en compression sont respectivement de -160° et - 24,0 MPa.

La figure 17 représente le dispositif de mesure par réflexion de la figure 6 appliqué à la mesure des contraintes dans un vitrage recouvert sur une face d'une couche opaque 41. On notera seulement que le dispositif émetteur et le dispositif récepteur se trouvent tous deux du même côté du vitrage, à savoir du côté opposé à la face qui est recouverte par la couche opaque.

Ce dispositif a été utilisé pour mesurer le déphasage Ψ dans l'échantillon de vitrage décrit précédemment et l'on a obtenu la courbe de la figure 18. On note que cette courbe présente des sauts de phase plus nombreux que dans le cas de la figure 14, parce que la sensibilité de la mesure est multipliée par deux dans ce mode de réalisation.

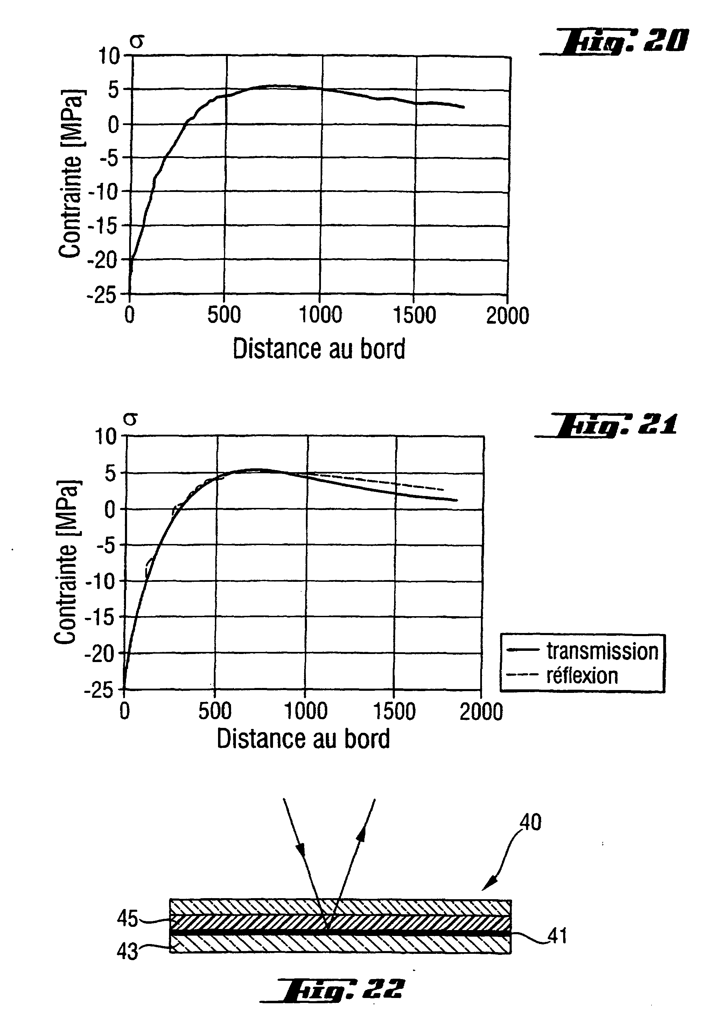

Par le procédé de découpage expliqué précédemment, on construit la figure 19 et, à partir de celle-ci, on déduit le profil des contraintes représenté sur la figure 20.

Sur la figure 19, on lit 70° pour le déphasage maximum en extension et -330° pour le déphasage minimum en compression. Ces valeurs correspondent respectivement à 5,2 MPa en extension et à -24,8 MPa en compression.

On peut remarquer que les valeurs des contraintes trouvées dans le cas de la réflexion sont pratiquement égales à celles trouvées en transmission.

On remarque également que ces valeurs concordent aussi avec celles trouvées avec l'appareil de Sharples. En effet, lors d'une expérimentation au cours de laquelle l'échantillon est éclairé par une longueur d'onde de 523 nm, on a trouvé 5,1 MPa pour l'extension et -23,3 MPa pour la compression.

Pour mieux se rendre compte de la concordance entre les mesures effectuées par le procédé en transmission et le procédé en réflexion, on superpose les courbes des figures 16 et 20 comme cela est montré à la figure 21.

Toutefois, malgré la coïncidence des résultats, on donne la préférence au montage en transmission car sa sensibilité est largement suffisante. La sensibilité double du montage en réflexion est plutôt un inconvénient car les sauts de phase que l'on rencontre au début du profil sont gênants et inutiles et il faut les éliminer par un traitement numérique. De plus, on constate que le profil en transmission est plus lisse que celui en réflexion. Enfin, l'interprétation des résultats en réflexion est délicate car la face avant de l'échantillon, qui est claire et souvent sale, produit beaucoup de lumière diffusée, qui est de la lumière parasite par rapport à la lumière diffusée par la couche opaque, seule utile pour la mesure.

On a supposé dans ce qui précède que la couche opaque recouvre une face extérieure du vitrage, mais l'invention s'applique également au vitrage de la figure 22 dans lequel la couche opaque 41 est comprise entre deux couches voisines du vitrage, par exemple entre une feuille de verre 43 et une couche intercalaire adhésive en matière plastique 45.

**Revendications**

1. Procédé pour la mesure des contraintes de forme dans un matériau transparent, tel qu'un vitrage en verre, comportant les étapes qui consistent :

   à émettre un faisceau lumineux monochromatique polarisé, par un dispositif émetteur de lumière qui est animé d'un mouvement oscillant afin de balayer le matériau transparent,
   à faire passer ledit faisceau transparent à travers un modulateur photoélastique, ayant deux fréquences de référence $f_0$ et $2f_0$,
   à faire passer à travers le matériau transparent, le faisceau lumineux modulé qui émerge du modulateur,
   à recevoir la lumière qui a traversé le matériau transparent dans un dispositif récepteur de lumière qui comporte un analyseur capable de déterminer les modifications introduites par la biréfringence du matériau transparent en raison des contraintes dont il est le siège,
   à transformer le faisceau lumineux reçu en signal électrique correspondant,
   à détecter les composantes fréquentielles B ($f_o$) et B ($2f_o$) du signal électrique qui correspondent auxdites fréquences de référence du modulateur,
à calculer à partir desdites composantes fréquentielles, le déphasage $\psi$ du signal électrique recueilli, lorsque des contraintes s'exerçent sur le matériau, par rapport au cas

où le matériau n'est pas soumis à des contraintes, par la formule

$$\psi = \text{Arctg } \frac{J_2\,(A_o)}{J_1\,(A_o)} \cdot \frac{B(f_o)}{B(2\,f_o)} \tag{1}$$

où $J_1$ et $J_2$ sont des fonctions de Bessel du 1er ordre et du 2ème ordre, et $A_o$ est l'amplitude de modulation de déphasage du modulateur,
et à calculer la contrainte $\sigma$ par la formule

$$\sigma = \frac{\lambda}{2\pi\,C_o E}\ \psi$$

où
$\lambda$ est la longueur d'onde de la lumière,
E est l'épaisseur du vitrage,
$C_o$ est la constante de photoélasticité du matériau.

**2.** Procédé selon la revendication 1, dans lequel on renvoie la lumière ayant traversé le matériau transparent à l'aide d'une bande diffusante et/ou réfléchissante disposée de l'autre côté du matériau transparent par rapport au dispositif émetteur de lumière, et en ce que l'on place le dispositif récepteur de lumière du même côté que le dispositif émetteur de lumière pour recevoir ladite lumière renvoyée.

**3.** Procédé selon la revendication 1, dans lequel on fait passer la lumière qui a traversé le matériau transparent, à travers une bande diffusante et/ou réfléchissante disposée de l'autre côté du matériau transparent par rapport au dispositif émetteur de lumière et en ce que l'on place le dispositif récepteur de l'autre côté du matériau transparent par rapport à la bande diffusante et/ou réfléchissante de manière à recevoir la lumière qui a traversé ladite bande.

**4.** Procédé selon les revendications 2 et 3, dans lequel on balaye le matériau transparent par un mouvement de va-et-vient du faisceau lumineux monochromatique par rapport au matériau transparent et le matériau est animé lui-même d'un mouvement relatif dans une direction sensiblement perpendiculaire audit mouvement de va-et-vient.

**5.** Procédé selon l'une des revendications 2 à 4, dans lequel on rend l'émetteur de lumière et le dispositif récepteur de lumière solidaires l'un de l'autre.

**6.** Procédé selon la revendication 5, dans lequel le balayage est effectué à partir d'un point fixe, le dispositif émetteur et le descriptif récepteur étant animés de mouvements oscillants en ce point.

**7.** Procédé selon l'une des revendications précédentes, dans lequel il est appliqué à la mesure des contraintes dans un ruban de verre et notamment de verre flotté sur une ligne de production.

**8.** Procédé selon la revendication 1, dans lequel on l'applique à la mesure des contraintes dans un objet transparent revêtu d'une couche sensiblement opaque sur l'une de ses faces et notamment constituée d'un émail de couleur très foncée tel que celui qui recouvre la périphérie d'un vitrage automobile.

**9.** Procédé selon la revendication 8, dans lequel le faisceau qui émerge du dispositif émetteur de lumière pénètre dans le matériau transparent par la face opposée à la face revêtue de la couche opaque et c'est la lumière diffusée par la couche opaque elle-même qui est reçue par un dispositif récepteur situé du côté opposé à ladite couche opaque.

**10.** Procédé selon la revendication 9, dans lequel le faisceau qui émerge du dispositif émetteur pénètre dans le matériau transparent par la face opposée à la face revêtue de la couche opaque et c'est la lumière diffusée par la couche opaque elle-même qui est reçue par un dispositif récepteur situé du côté de ladite couche opaque.

**11.** Procédé selon l'une des revendications 8 à 10, dans lequel l'applique à des vitrages bombés et en ce que la formule fournissant la contrainte σ en fonction du déphasage ψ est corrigée en fonction de l'angle d'incidence et de l'épaisseur.

**12.** Dispositif pour le mise en oeuvre du procédé selon l'une des revendications précédentes, comportant:

un dispositif émetteur de lumière incluant une *source* lumineuse (42) qui émet un faisceau de lumière monochromatique, un polariseur (44) et un modulateur photoélastique (46) fournissant deux fréquences de réfé-rence, $f_0$ et $2f_0$,
des moyens de déplacement relatif du faisceau lumineux (62) par rapport au matériau transparent (40),
un dispositif récepteur de la lumière après sa traversée du matériau transparent comprenant un analyseur (48), une photodiode (50), deux amplificateurs à détection synchrone (54, 56) ayant pour référence les deux fréquences fournies par le modulateur, et
un banc d'acquisition (58) permettant de calculer le déphasage Ψ et la contrainte σ.

**13.** Dispositif selon la revendication 12, dans lequel il comporte également une bande diffusante et/ou réfléchissante (60) située du côté du matériau transparent (40) opposé au dispositif émetteur de lumière et celui-ci est solidaire du dispositif récepteur de lumière.

**14.** Dispositif selon la revendication 13, dans lequel le dispositif émetteur et le dispositif récepteur de lumière sont mus d'un mouvement oscillant.

**15.** Dispositif selon la revendication 12, dans lequel le dispositif émetteur et le dispositif récepteur sont situés de part et d'autre du matériau transparent (40) et celui-ci est recouvert d'une couche sensiblement opaque (41) située du côté du dispositif récepteur.

**16.** Dispositif selon la revendication 15, dans lequel une lentille optique convergente (51) est prévue pour faire converger le faisceau issu de l'analyseur (48) sur la photodiode (50).

**17.** Dispositif selon la revendication 16, dans lequel le matériau transparent est un vitrage feuilleté et la couche opaque (41) est comprise entre deux couches voisines (43, 45) du vitrage.

**Patentansprüche**

**1.** Verfahren zum Messen der Formspannungen in einem transparenten Material wie einer Glasscheibe, das die Stufen umfasst, die darin bestehen:

- einen polarisierten monochromatischen Lichtstrahl von einer Vorrichtung zum Aussenden von Licht, die mit einer oszillierenden Bewegung angetrieben wird, auszusenden, um das transparente Material abzutasten,

- den transparenten Strahl durch einen photoelastischen Modulator mit zwei Referenzfrequenzen, $f_0$ und $2f_0$, zu schicken,

- den modulierten Lichtstrahl, der den Modulator verläßt, durch das transparente Material zu schicken,

- das Licht, das das transparente Material durchstrahlt hat, in einer Lichtempfangseinrichtung zu empfangen, die einen Analysator umfasst, der in der Lage ist, die Modifizierungen zu ermitteln, die von der Doppelbrechung des transparenten Materials aufgrund der Spannungen, die es enthält, verursacht worden sind,

- den empfangenen Lichtstrahl in ein entsprechendes elektrisches Signal umzuwandeln,

- die Frequenzkomponenten $B(f_0)$ und $B(2f_0)$ des elektrischen Signals zu detektieren, die den Referenzfrequenzen des Modulators entsprechen,

- aus diesen Frequenzkomponenten die Phasenverschiebung ψ des empfangenen elektrischen Signals, wenn Spannungen im Material herrschen, in Bezug auf den Fall, in welchem das Material keinen Spannungen un-terliegt, durch die Formel

$$\psi = \arctan \frac{J_2(A_0)}{J_1(A_0)} \cdot \frac{B(f_0)}{B(2f_0)} \qquad (1),$$

in welcher $J_1$ und $J_2$ Bessel-Funktionen erster und zweiter Ordnung bedeuten und $A_0$ die Modulationsamplitude der Phasenverschiebung des Modulators bedeutet und

- die Spannung $\sigma$ mit der Formel

$$\sigma = \frac{\lambda}{2\pi C_0 E} \, \psi,$$

worin
$\lambda$ die Lichtwellenlänge,
E die Dicke der Glasscheibe und
$C_0$ die Photoelastizitätskonstante des Materials bedeutet,
zu berechnen.

2. Verfahren nach Anspruch 1, in welchem das Licht, das das transparente Material durchstrahlt hat, mittels eines streuenden und/oder reflektierenden Bandes, das in Bezug auf die das Licht aussendende Einrichtung auf der anderen Seite des transparenten Bandes angeordnet ist, zurückgeschickt wird, und die das Licht empfangende Einrichtung auf derselben Seite wie die das Licht aussendende Einrichtung angeordnet wird, um das zurückgeschickte Licht zu empfangen.

3. Verfahren nach Anspruch 1, in welchem das Licht, welches das transparente Material durchstrahlt hat, durch ein streuendes und/oder reflektierendes Band geschickt wird, das in Bezug auf die das Licht aussendende Einrichtung auf der anderen Seite des transparenten Materials angeordnet ist, und die Empfangseinrichtung in Bezug auf das streuende und/oder reflektierende Band auf der anderen Seite des transparenten Materials derart angeordnet wird, dass sie das Licht empfängt, welches dieses Band durchstrahlt hat.

4. Verfahren nach den Ansprüchen 2 und 3, in welchem das transparente Material mit einem monochromatischen Lichtstrahl abgetastet wird, der in Bezug auf das transparente Material hin- und hergeht, und das Material seinerseits mit einer Relativbewegung in einer Richtung bewegt wird, die zu der hin- und hergehenden Bewegung im Wesentlichen quer verläuft.

5. Verfahren nach einem der Ansprüche 2 bis 4, in welchem der Lichtstrahler und die das Licht empfangende Einrichtung fest miteinander verbunden sind.

6. Verfahren nach Anspruch 5, in welchem der Abtastvorgang ausgehend von einem Festpunkt durchgeführt wird, wobei die aussendende Einrichtung und die empfangende Einrichtung an diesem Punkt mit einer Schwingbewegung angetrieben werden.

7. Verfahren nach einem der vorhergehenden Ansprüche, in welchem es auf das Messen der Spannungen in einem Glasband, insbesondere in einem Floatglas in einer Produktionslinie, angewendet wird.

8. Verfahren nach Anspruch 1, in welchem es auf die Messung der Spannungen in einem transparenten Objekt angewendet wird, das auf einer Seite mit einer im Wesentlichen opaken Schicht, die insbesondere aus einem Email mit einer sehr dunklen Farbe besteht, derart überzogen ist, dass sie den Rand eines Autoglases bedeckt.

9. Verfahren nach Anspruch 8, in welchem der Strahl, der von der das Licht aussendenden Einrichtung ausgesendet wird, in das transparente Material auf der Seite eintritt, die der mit der opaken Schicht bedeckten Seite gegenüberliegt, und das von der opaken Schicht gestreute Licht von einer Empfangseinrichtung empfangen wird, die sich auf der der opaken Schicht gegenüberliegenden Seite befindet.

10. Verfahren nach Anspruch 9, in welchem der Strahl, der von der aussendenden Einrichtung ausgesendet wird, in das transparente Material auf der Seite eintritt, die der mit der opaken Schicht bedeckten Seite gegenüberliegt, und das von der opaken Schicht gestreute Licht von einer Empfangseinrichtung empfangen wird, die sich auf der Seite der opaken Schicht befindet.

11. Verfahren nach einem der Ansprüche 8 bis 10, in welchem es auf gebogene Glasscheiben angewendet wird, und die Formel, welche die Spannung $\sigma$ in Abhängigkeit von der Phasenverschiebung $\psi$ liefert, in Abhängigkeit von Einfallswinkel und Dicke korrigiert wird.

12. Vorrichtung zur Durchführung des Verfahrens nach einem der vorhergehenden Ansprüche, welche

   - eine Licht aussendende Einrichtung, die eine Lichtquelle (42), die einen monochromatischen Lichtstrahl aussendet, einen Polarisator (44) und einen photoelastischen Modulator (46), der zwei Referenzfrequenzen, $f_0$ und $2f_0$, liefert, umfasst,

   - Mittel zur Relativbewegung des Lichtstrahls (62) in Bezug auf das transparente Material (40),

   - eine Empfangseinrichtung für das Licht, nachdem es das transparente Material durchstrahlt hat, die einen Analysator (48), eine Photodiode (50) und zwei Verstärker mit synchroner Detektion (54, 56) mit als Referenz die zwei vom Modulator gelieferten Frequenzen umfasst, und

   - eine Erfassungsbank (58), welche die Berechnung der Phasenverschiebung $\psi$ und der Spannung $\sigma$ erlaubt,

   umfasst.

13. Vorrichtung nach Anspruch 12, in welcher sie auch ein streuendes und/oder reflektierendes Band (60) enthält, das sich auf der Seite des transparenten Materials (40) befindet, die der das Licht aussendenden Einrichtung gegenüberliegt, die mit der das Licht empfangenden Einrichtung fest verbunden ist.

14. Vorrichtung nach Anspruch 13, in welcher die das Licht aussendende Einrichtung und die das Licht empfangende Einrichtung mit einer oszillierenden Bewegung angetrieben werden.

15. Vorrichtung nach Anspruch 12, in welcher die aussendende Einrichtung und die empfangende Einrichtung sich auf beiden Seiten des transparenten Materials (40) befinden und dieses mit einer im Wesentlichen opaken Schicht (41) bedeckt ist, die sich auf der Seite der Empfangseinrichtung befindet.

16. Vorrichtung nach Anspruch 15, in welcher eine optische Sammellinse (51) vorgesehen ist, um den vom Analysator (48) austretenden Strahl auf die Photodiode (50) konvergieren zu lassen.

17. Vorrichtung nach Anspruch 16, in welcher das transparente Material eine Verbundglasscheibe ist und die opake Schicht (41) zwischen zwei einander benachbarte Lagen (43, 45) der Verbundglasscheibe eingeschlossen ist.

**Claims**

1. Method for measuring shape stresses in a transparent material, such as a pane of glass, comprising the steps which consist of:

   emitting a polarised monochromatic light beam, by means of a light-emitting device which is driven in an oscillating movement in order to sweep the transparent material,

   causing the said transparent beam to pass through a photoelastic modulator having two reference frequencies $f_0$ and $2 f_0$,

   causing the modulated light beam which emerges from the modulator to pass through the transparent material,

   receiving the light which has passed through the transparent material in a light-receiving device which comprises an analyser capable of determining the modifications introduced by the birefringence of the transparent material because of the stresses of which it is the seat,

   transforming the received light beam into a corresponding electrical signal,

detecting the frequency components B ($f_0$) and B ($2f_0$) of the electrical signal which correspond to the said reference frequencies of the modulator,

calculating, from the said frequency components, the phase difference $\psi$ of the electrical signal collected, when stresses are exerted on the material, compared with the case where the material is not subjected to stresses, by means of the formula

$$\psi = \text{Arctg } \frac{J_2(A_0)}{J_1(A_0)} \cdot \frac{B(f_0)}{B(2f_0)} \qquad (1)$$

where $J_1$ and $J_2$ are first order and second order Bessel functions, and $A_0$ is the phase-difference modulation amplitude of the modulator,
and calculating the stress $\sigma$ by means of the formula

$$\sigma = \frac{\lambda}{2\pi C_0 E} \psi$$

where $\lambda$ is the wavelength of the light,
E is the thickness of the glazing,
$C_0$ is the photoelasticity constant of the material.

2. Method according to Claim 1, in which the light which has passed through the transparent material is returned by means of a diffusing and/or reflective strip disposed on the other side of the transparent material with respect to the light-emitting device, and in that the light-receiving device is placed on the same side as the light-emitting device in order to receive the said returned light.

3. Method according to Claim 1, in which the light which has passed through the transparent material is caused to pass through a diffusing and/or reflective strip disposed on the other side of the transparent material with respect to the light-emitting device and in that the receiving device is placed on the other side of the transparent material with respective to the diffusing and/or reflective strip so as to receive the light which has passed through the said strip.

4. Method according to Claims 2 and 3, in which the transparent material is swept in a to and fro movement of the monochromatic light beam with respect to the transparent material and the material is itself driven in a relative movement in a direction substantially at right angles to the said to and fro movement.

5. Method according to one of Claims 2 to 4, in which the light emitter and the light-receiving device are fixed to each other.

6. Method according to Claim 5, in which the sweeping is carried out from a fixed point, the emitting device and the receiving device being driven in oscillating movements at this point.

7. Method according to one of the preceding claims, in which it is applied to the measurement of the stresses in a strip of glass and in particular float glass on a production line.

8. Method according to Claim 1, in which it is applied to the measurement of the stresses in a transparent object covered with a substantially opaque coating on one of its faces and in particular consisting of a very dark coloured enamel such as the one which covers the periphery of a car window.

9. Method according to Claim 8, in which the beam which emerges from the light-emitting device enters the transparent material through the face opposite to the face covered with the opaque coating and in that it is the light diffused by the opaque coating itself which is received by a receiving device situated on the opposite side to the said opaque coating.

10. Method according to Claim 9, in which the beam which emerges from the emitting device enters the transparent material through the face opposite to the face covered with the opaque coating and it is the light diffused by the opaque coating itself which is received by a receiving device situated on the same side as the said opaque coating.

11. Method according to one of Claims 8 to 10, in which it is applied to curved glazing and in that the formula supplying the stress $\sigma$ as a function of the phase difference $\psi$ is corrected according to the angle of incidence and the thickness.

12. Device for implementing the method according to one of the preceding claims, comprising:

a light-emitting device including a light source (42) which emits a monochromatic light beam, a polariser (44) and a photoelastic modulator (46) supplying two reference frequencies $f_0$ and $2f_0$,

means of relative movement of the light beam (62) with respect to the transparent material (40),

a device receiving the light after it has passed through the transparent material, comprising an analyser (48), a photodiode (50), two synchronous-detection amplifiers (54, 56) having as a reference the two frequencies supplied by the modulator, and

an acquisition bench (58) for calculating the phase difference $\psi$ and the stress $\sigma$.

13. Device according to Claim 12, in which it also comprises a diffusing and/or reflective strip (60) situated on the side of the transparent material (40) opposite to the light-emitting device and the latter is fixed to the light-receiving device.

14. Device according to Claim 13, in which the emitting device and the light-receiving device are moved in an oscillating movement.

15. Device according to Claim 12, in which the emitting device and the receiving device are situated on each side of the transparent material (40) and the latter is covered with a substantially opaque coating (41) situated on the same side as the receiving device.

16. Device according to Claim 15, in which a convergent optical lens (51) is provided for making the beam issuing from the analyser (48) converge on the photodiode (50).

17. Device according to Claim 16, in which the transparent material is a laminated glazing and the opaque layer (41) is included between two adjacent layers (43, 45) of the glazing.

**Fig: 1**

**Fig: 2**

*Fig. 3*

Amplitude de vibration

temps

*Fig. 4*

*Fig. 5*

*Fig. 6*

*Fig. 7*

*Fig. 8*

18

*Fig. 9*

*Fig. 10*

*Fig. 11*

**Fig. 12**

**Fig. 13**

Fig. 14

Fig. 15

Fig. 16

$f_0$

65

40 ─→ 41

42

44

46

64

51

48

54

$f_0$

58

50

56

$2 f_0$

$\sigma_{(x)}$ →

*Fig. 17*

*Fig. 18*

Ψ

90
70
50
30
10
-10
-30
-50
-70
-90

Déphasage (degré)

0        500        1000        1500        2000
Distance au bord

*Fig. 19*

Ψ

100
50
0
-50
-100
-150
-200
-250
-300
-350

Déphasage (degré)

0   200   400   600   800   1000   1200   1400   1600   1800
Distance au bord

Fig. 20

transmission
réflexion

Fig. 21

Fig. 22